# EUROPEAN PATENT APPLICATION

(11) **EP 4 167 201 A1**
(43) Date of publication of application: **19.04.2023**
(21) Application number: 21202377.4
(22) Date of filing: 13.10.2021
(51) Int. Cl.: G07C 5/00

(54) **DEVICE FOR ACCESSING DATA SENT BY A DONGLE CONNECTED TO A VEHICLE AND METHOD FOR REDUCING THE POWER CONSUMPTION OF SUCH DEVICE**

(71) Applicant: Nagravision S.A., 1033 Cheseaux-sur-Lausanne (CH)
(72) Inventor: HERNANDEZ, Juan-Ramon, 1033 CHESEAUX-SUR-LAUSANNE (CH)
(74) Representative: Ipside

(57) **Abstract**

A device (120) is proposed for accessing data sent by a dongle (110) connected to a vehicle (100). Such device is battery powered and comprises means for wirelessly communicating with:
- at least one dongle (110) connected to a corresponding vehicle (100);
- a backend server (150) through a communications network (140); and
- at least one terminal equipment (160).

## Description

### 1. FIELD OF THE DISCLOSURE

The field of the disclosure is that of the access to vehicle's data.

More specifically, the disclosure relates to an electronic device configured for accessing data from vehicles and sending the data to a remote server. The disclosure also relates to a method for reducing the power consumption of such device.

The disclosure can be of interest in any field wherein accessing to vehicle's data is of interest, e.g. for anti-theft purposes or for monitoring components of a vehicle.

### 2. TECHNOLOGICAL BACKGROUND

Electronic systems for accessing to vehicle's data are known. For instance, dongles that can be connected to a vehicle, e.g. through an on board diagnostics, hereafter OBD, port of the vehicle, can communicate with an external device for providing data read from the vehicle. Such data can be for instance the status of the various vehicle sub-systems (real-time parameters, diagnostic trouble codes, engine status, etc.), e.g. following the OBD standards when relevant. Alternatively, the dongle can provide other data like the position of the vehicle in case e.g. a Global Positioning Specification, hereafter GPS, receiver is implemented in the vehicle.

However, such dongles are well-known and can be found easily in a vehicle as they connect to known ports or interfaces of the vehicle. Consequently, in case a vehicle is stolen, a thief can find the dongle without much efforts and remove it from the vehicle. In that case, there is no more possibility to get information about the vehicle.

There is thus a need for a solution for securing the access to the data of a vehicle and that such solution last over time.

### 3. SUMMARY

A particular aspect of the present disclosure relates to a device for accessing data sent by a dongle connected to a vehicle. Such device is battery powered and comprises means for wirelessly communicating with:
- at least one dongle connected to a corresponding vehicle;
- a backend server through a communications network; and
- at least one terminal equipment.

Thus, the present disclosure proposes a new and inventive solution for accessing to data sent by a dongle connected to a vehicle, e.g. connected to an OBD port of the vehicle. Such data may comprise e.g. the vehicle identification number (also known as "chassis number" or "frame number") as defined e.g. in the International Organization for Standardization, hereafter ISO, standards 3779 and 4030 or information about the status of the various vehicle sub-systems (real-time parameters, diagnostic trouble codes, engine status, etc.), e.g. following the OBD standards.

More particularly, a device according to the present disclosure is battery powered and communicates wirelessly with the backend server for providing the accessed data. As such there is thus no need for an electrical wired connection with the vehicle and the device can be easily hidden in the vehicle. This secures the access to information relating to the vehicle, e.g. in case of theft. In addition, the device comprises means for communicating wirelessly with a terminal equipment (e.g. a smartphone, a tablet equipped with wireless transceivers, etc.). Accordingly, instead of providing the data of the vehicle to the backend server through the communications network, the device can provide the data to the terminal equipment which, in turn, can provide it to the backend server. The terminal equipment then behaves as a relay for providing the data to the backend server. The communication link between the device and the terminal equipment can be a low power communication link optimized for power consumption as it may be a direct communication link, e.g. a point to point communication link between the device and the terminal equipment, without going through a third party device (e.g. the communication link does not go through the communications network). This provides electrical power reduction for the device when providing the data from the vehicle. This increases the lifetime of the battery and thus of the device at the end.

In some embodiments, the means for wirelessly communicating comprise a short-range wireless communications transceiver for communicating with the at least one terminal equipment.

It can be e.g. a Bluetooth or a Bluetooth Low Energy transceiver.

In some embodiments, the means for wirelessly communicating comprise a long-range wireless communications transceiver for communicating with the backend server through the communications network.

It can be a transceiver according to a cellular network standard, e.g. a Third Generation Partnership Project, hereafter 3GPP, 2G, 3G, 4G or 5G cellular network.

In some embodiments, the device (according to any of the embodiments disclosed above) is implemented in a vehicle. The means for wirelessly communicating are configured for communicating with a dongle connected to the vehicle.

In some embodiments, the device is not electrically wired connected to the vehicle.

Thus, the device can be implemented in the vehicle in a hidden place so that it cannot be found easily e.g. in case the vehicle is stollen.

Another aspect of the present disclosure relates to a vehicle comprising a device as disclosed above (according to any of the embodiments disclosed above). The device is not electrically wired connected to the vehicle.

Another aspect of the present disclosure relates to a method for reducing the power consumption of as disclosed above (according to any of the embodiments disclosed above). According to such method, a wireless communication link being established between the device and the backend server through the communications network, the device implements:
- establishing a wireless communication link with a terminal equipment; and
- ending the wireless communication link with the backend server through the communications network.

The communication link between the device and the terminal equipment can be optimized for power consumption as it may be a direct communication link, e.g. it does not need to go through the communications network or through a third party device. This provides electrical power reduction for the device when providing the monitored data. This increases the lifetime of the battery and thus of the device at the end.

In some embodiments, the establishing the wireless communication link with the terminal equipment comprises:
- broadcasting an advertisement message;
- responsive to said broadcasting, receiving a request, sent by the terminal equipment, for establishing said wireless communication link with the terminal equipment.

In some embodiments, the establishing the wireless communication link with the terminal equipment comprises: receiving an advertisement message broadcasted by the terminal equipment. The broadcasting an advertisement message by the device is responsive to the receiving the advertisement message broadcasted by the terminal equipment.

In some embodiments, the device implements pairing with a given terminal equipment, the pairing comprising:
- receiving a request, sent by the backend server, for initiating a discovery procedure;
- responsive to the receiving the request, broadcasting a discovery message;
- receiving a request, sent by the backend server, for pairing with a given terminal equipment that received the broadcasted discovery message.

The connection with the terminal equipment is established only if the device identifies the terminal equipment as being the given terminal equipment it has been paired with.

For instance, a challenge-response exchange between the device and the terminal equipment allows the device to identify the terminal equipment as being the given terminal equipment it has been paired with.

In some embodiments, the device implements exchanging information with the terminal equipment, the exchanging information comprising: receiving a command, sent by the terminal equipment, for implementing a corresponding action in the terminal equipment.

In some embodiments, the device is implemented in a vehicle (in any of embodiment discussed above), the exchanging information comprising:
- receiving a request, sent by the terminal equipment, for providing data;
- responsive to the receiving said request, sending the requested data to the terminal equipment.

The data may be data relating to the vehicle, e.g. provided to the device by the dongle, and may comprise the VIN of the vehicle or additional data extracted from the vehicle (e.g. the status of the various vehicle sub-systems (real-time parameters, diagnostic trouble codes, engine status, etc.)). The data may also comprise a status of the device (e.g. its internal state, etc.).

In some embodiments, the device implements:
- ending the connection with the terminal equipment; and
- re-establishing a wireless communication link with the backend server through the communications network.

### 4. LIST OF FIGURES

Other features and advantages of embodiments shall appear from the following description, given by way of indicative and non-exhaustive examples and from the appended drawings, of which:
- Figure 1 illustrates a device implemented in a vehicle and configured for accessing data sent by a dongle connected to the vehicle according to one embodiment of the present disclosure;
- Figure 2 illustrates an example of the structural blocks that can be implemented in the device of Figure 1;
- Figure 3 illustrates the steps of a method for reducing the power consumption of the device of Figure 1 according to one embodiment of the present disclosure;
- Figure 3a illustrates steps implemented during the step of pairing of the method of Figure 3 according to one embodiment of the present disclosure;
- Figure 3b illustrates steps implemented during the step of establishing a wireless communication link of the method of Figure 3 according to one embodiment of the present disclosure;
- Figure 3c illustrates steps implemented during the step of exchanging information of the method of Figure 3 according to one embodiment of the present disclosure.

### 5. DETAILED DESCRIPTION

In all of the Figures of the present document, the same numerical reference signs designate similar elements and steps.

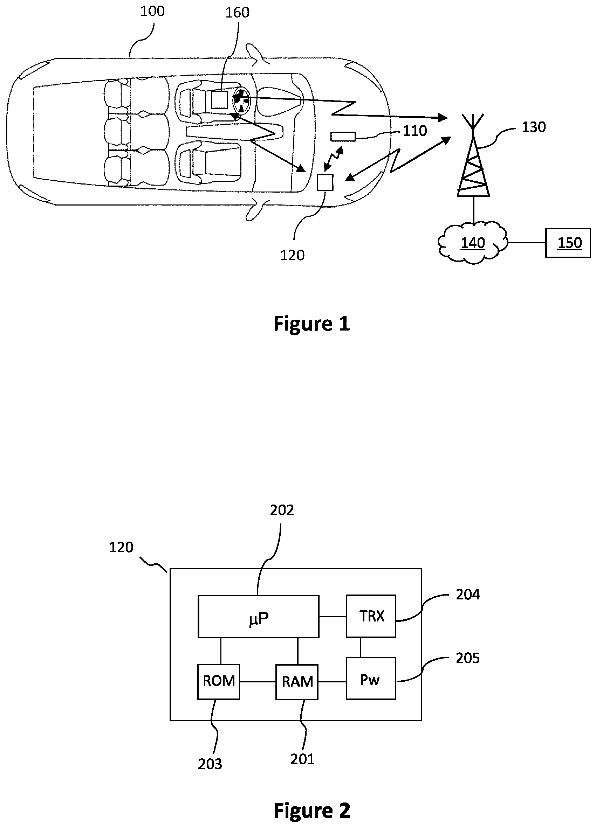

Referring now to **Figure 1****,** we describe a device 120 configured for accessing data sent by a dongle 110 connected to a vehicle 100 according to one embodiment of the present disclosure. An example of the structural blocks that can be implemented in the device 120 are further described in relation with **Figure 2****.**

The device 120 comprises a battery 205 and is thus battery powered. The device 120 further comprises means 204 for wirelessly communicating with:
- the dongle 110 connected to the vehicle 100;
- a backend server 150 through the communications network 140; and
- a terminal equipment 160.

Such terminal equipment 160 may be a user equipment such as a smartphone (e.g. the smartphone of the car owner), a tablet equipped with wireless transceivers, etc.

The dongle 110 is connected to the vehicle 100 through an OBD port of the vehicle 100. However, in other embodiments, the dongle 110 is connected to another type of port or interface (through a wired or a wireless communication link) allowing to access to data of the vehicle, e.g. to a Controller Area Network, or CAN, bus.

The means 204 for wirelessly communicating comprise a short-range wireless communications transceiver for communicating with the dongle 110. It can be e.g. a Bluetooth transceiver or a Bluetooth Low Energy transceiver.

In some embodiments, the device 120 is configured for wirelessly communicating with any dongle connected to a corresponding vehicle, and not only with the dongle 110. This holds as long as such dongle is within the range of the short-range wireless communications transceiver of the means 204 for wirelessly communicating.

Back to Figures 1 and 2, the means 204 for wirelessly communicating further comprise a transceiver according to one (or more) long-range wireless communications protocol. Such long-range wireless communications protocol maybe a cellular network standard for communicating with the backend server 150 through the base station 130 and the communications network 140. It can be e.g. a Third Generation Partnership Project, hereafter 3GPP, 2G, 3G, 4G or 5G cellular network. In other embodiments, the transceiver for communicating with the backend server 150 implements another long-range wireless communications standard, e.g. a narrowband standard dedicated to the internet of things (SigFox^{®}, LoRa^{®}, etc.).

Back to Figures 1 and 2, the device 120 is configured for accessing data sent by the dongle 110, e.g. the VIN of the vehicle 100 (or of the vehicles within the range of the short-range wireless communications transceiver depending on the embodiments) or information about the status of the various sub-systems of the vehicle 100 (real-time parameters, diagnostic trouble codes, engine status, etc.), e.g. following the OBD standards in corresponding implementations, and reporting it to the backend server 150. As such, the device 120 behaves as a tracker device allowing to track the data relating to the vehicle 100.

The means 204 for wirelessly communicating also comprise a low power transceiver for communicating with the terminal equipment 160. Here, by low power we mean a transceiver whose power consumption is lower than the power consumption of the transceiver for communicating with the backend server 150 through the communications network 140. Such low power transceiver may be a short-range wireless communications transceiver, e.g. a Bluetooth transceiver or a Bluetooth Low Energy transceiver. Depending on the implementations, the transceiver for wirelessly communicating with the terminal equipment 160 may be the same transceiver as the transceiver for communicating with the dongle 110 discussed above, or it may be a distinct transceiver.

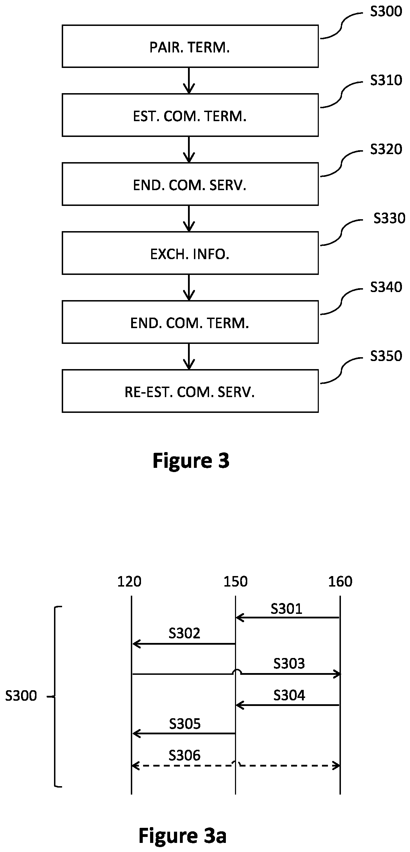

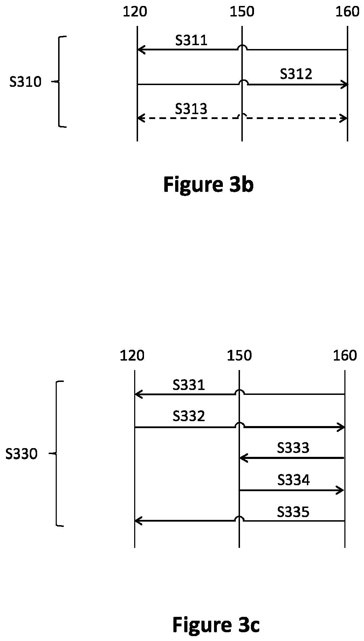

More generally, the device 120 is configured for implementing some of the steps of the method described below in relation with Figures 3, 3a, 3b and 3c. Accordingly, in some embodiments, instead of providing the data of the vehicle 100 to the backend server 150 through the communications network 140, the device 120 provides the data to the terminal equipment 160 which, in turn, provides it to the backend server 150. The terminal equipment 160 then behaves as a relay for providing the data to the backend server 150. This overcomes potential issues with the communication through the communications network 140 that the device 120 may experience. Furthermore, the wireless communication link between the device 120 and the terminal equipment 160 can be optimized for power consumption using the low power transceiver so that the power consumption of the device 120 is reduced compared to the case where the data is provided directly to the backend server 150 through the communications network 140. This increases the lifetime of the battery 205 and thus of the device 120 at the end.

In some embodiments, the device 120 comprises a Global Navigation Satellite System, hereafter GNSS, receiver. It can be e.g. a Global Positioning Specification, hereafter GPS, a Galileo, a Glonass or a Beidou receiver. Accordingly, in some embodiments, the device 120 reports its position and/or corresponding geolocation data to the backend server 150.

Back to Figures 1 and 2, as discussed above, the device 120 is battery powered and communicates wirelessly with the dongle 110. Consequently, the device 120 is not electrically wired connected to the vehicle 100. The device 120 can thus be implemented in the vehicle in a hidden place so that it cannot be found easily e.g. in case the vehicle 100 is stollen. Even in such case, the data can still be accessed remotely from the vehicle 100 through the communication with the backend server150 as long as the device 120 is not discovered by the thief.

In Figure 1, the vehicle 100 is represented in the form of a car. However, the device 120 can be implemented in any vehicle that comprises a port or interface wherein a dongle 110 can be implemented (e.g. a truck).

In order to be able to implement the method discussed below in relation with Figures 3, 3a, 3b and 3c (according to any of the embodiments disclosed below), in some embodiments the device 120 also comprises:
- a non-volatile memory 203 (e.g. a read-only memory (ROM), a hard disk, a flash memory, etc.);
- a volatile memory 201 (e.g. a random-access memory or RAM) and a processor 202.

The non-volatile memory 203 is a non-transitory computer-readable carrier medium. It stores executable program code instructions, which are executed by the processor 202 in order to enable implementation of some steps of the method described below (method for reducing the power consumption of the device 120) in the various embodiment disclosed below in relation with Figures 3, 3a, 3b and 3c.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

The steps of the method for reducing the power consumption of the device 120 may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 3**, we describe a method for reducing the power consumption of the device 120. Some steps of the method are further described in relation with Figures 3a, 3b and 3c.

In a **step S300**, the device 120 is paired with the terminal equipment 160.

According to the embodiment of Figure 3a, such pairing is initiated in a **step S301** by the terminal equipment 160 sending, to the backend server 150, a request for having the device 120 to initiate a discovery procedure. For instance, the step S301 is implemented by the terminal equipment 160 responsive to a user having selected or entered a command for such pairing in an interface (e.g. a tactile screen) of the terminal equipment 160.

Correspondingly, in step S301, the backend server 150 receives the request, sent by the terminal equipment 160, for having the device 120 to initiate a discovery procedure.

Responsive to the receiving the request, in a **step S302** the backend server 150 sends to the device 120, through the communications network 140, a request for initiating the discovery procedure.

Correspondingly, in step S302, the device 120 receives the request, sent by the backend server 150, for initiating the discovery procedure.

Responsive to the receiving the request, in a **step S303** the device 120 broadcasts a discovery message using the low power wireless communications transceiver.

Correspondingly, in the step S303 the terminal equipment 160 receives the discovery message sent by the device 120.

Responsive to the receiving the discovery message, in a **step S304** the terminal equipment 160 sends a request to the backend server 150 for being paired with the device 120 that broadcasted the discovery message. For instance, the step S304 is implemented by the terminal equipment 160 responsive to the user having selected or entered a command for such pairing in the interface of the terminal equipment 160. The user may have selected or entered the command after having read an information displayed on the interface of the terminal equipment 160 showing that the terminal equipment 160 received the discovery message sent by the device 120.

Correspondingly, in step S304, the backend server 150 receives a request sent by the terminal equipment 160 for having the terminal equipment 160 to be paired with the device 120 that broadcasted the discovery message.

Responsive to the receiving the request, in a **step S305** the backend server 150 sends, through the communications network 140, a request to the device 120 for pairing with the terminal equipment 160 that received the discovery message.

Depending on the implementations, such pairing corresponds to having the device 120 that keeps in memory the information provided by the backend server 150 in the request received in step S305, such information allowing the device 120 to identify the terminal equipment 160. In some implementations, responsive to the receiving the request for pairing in step S305, the device 120 implements a **step S306** wherein a pairing protocol is implemented with the terminal equipment 160. It may be e.g. a Bluetooth pairing protocol. However, in other implementations, the step S306 is not implemented.

In some embodiments, the step S300 is not implemented, e.g. when the device 120 is already paired with the terminal equipment 160 or when any terminal equipment may be used as a relay for providing the data sent by the device 120 in destination of the backend server 150.

Back to Figure 3, in a **step S310**, while a wireless communication link is established between the device 120 and the backend server 150 through the communications network 140, the device 120 establishes a wireless communication link with the terminal equipment 160 using the low power wireless communications transceiver.

According to the embodiment of Figure 3b, such establishment of the wireless communication link with the terminal equipment 160 is initiated by the terminal equipment 160 that broadcasts, in a **step S311**, an advertisement message. Such information message is representative of the terminal equipment 160 being available for establishing a wireless communication link.

Responsive to receiving the advertisement message broadcasted by the terminal equipment 160, the device 120 broadcasts, in a **step S312**, another advertisement message representative of the device 120 being available for establishing wireless communications link using the low power wireless communications transceiver. For instance, the device 120 may enable a discoverable mode, e.g. a Bluetooth Low Energy discoverable mode in corresponding embodiments.

Back to Figure 3b, responsive to the receiving the advertisement message broadcasted by the device 120, in a **step S313**, the terminal equipment 160 establishes with the device 120 the wireless communications link, e.g. a short-range wireless communications link. For instance, the terminal equipment 160 sends a request to the device 120 for establishing the wireless communication link with the terminal equipment 160. Correspondingly, the device 120 receives the request sent by the terminal equipment 160 and accepts the wireless communication link with the terminal equipment 160.

In some embodiments, the step S311 is not implemented and the device 120 implements the step S312 without having received any advertisement message broadcasted by the terminal equipment 160.

In some embodiments, the wireless communication link between the device 120 and the terminal equipment 160 is established only if the device 120 identifies the terminal equipment 160 as being the terminal equipment 160 it has been paired with (e.g. through an implementation of the step S300, in any of the embodiments discussed above). For instance, a challenge-response exchange between the device 120 and the terminal equipment 160 allows the device 120 to identify the terminal equipment 160 as being the terminal equipment 160 it has been paired with.

Back to Figure 3, in a **step S320**, the device 120 ends the wireless communication link with the backend server 150 through the communications network 140.

The terminal equipment 160 then behaves as a relay for providing the data to the backend server 150 while the device 120 uses the low power wireless communications transceiver. This provides electrical power reduction for the device 120. This increases the lifetime of the battery 205 and thus of the device 120 at the end.

In a **step S330**, the device 120 exchanges information with the terminal equipment 160 through the wireless communications link established using the low power wireless communications transceiver.

According to the embodiment of Figure 3c, such exchange of information may comprise the terminal equipment 160 sending, in a **step S331**, a request to the device 120 for providing data.

Correspondingly, in step S331, the device 120 receives the request, sent by the terminal equipment 160, for providing data.

In a **step S332**, responsive to the receiving the request, the device 120 sends the requested data to the terminal equipment 160 through the wireless communications link established using the low power wireless communications transceiver.

Correspondingly, in step S332, the terminal equipment 160 receives the data sent by the device 120.

For instance, such data may be data relating to the vehicle 100, e.g. provided to the device 120 by the dongle 110, and may comprise the VIN of the vehicle 100 or additional data extracted from the vehicle 100 (e.g. the status of the various vehicle sub-systems (real-time parameters, diagnostic trouble codes, engine status, etc.)). The data may also comprise a status of the device 120 (e.g. its internal logical state, the remaining electrical power in the battery 205, etc.).

According to the embodiment of Figure 3c, the data comprise the status of the device 120. Accordingly, in a **step S333**, the terminal equipment 160 sends all or part of the status to the backend server 150.

Responsive to receiving all or part of the status sent by the terminal equipment 160, the backend server 150 sends, in a **step S334**, a command to the terminal equipment 160, the command being in destination of the device 120 for having the device to implement a corresponding action.

Correspondingly, in step S334, the terminal equipment 160 receives the command sent by the backend server 150.

In some embodiments, the step S334 is not implemented responsive to receiving all or part of the status sent by the terminal equipment 160. The step S334 may rather be executed at any time by the backend server 150, e.g. when deciding to send a command to the device 120. This may be e.g. as a consequence of an operational action.

Back to Figure 3, responsive to the receiving of the command sent by the backend server 150, in a **step S335**, the terminal equipment 160 sends the command to the device 120 for having the device 120 to implement the corresponding action.

Correspondingly, in step S335, the device 120 receives the command sent by the terminal equipment 160.

As such, the terminal equipment 160 still behaves as a relay between the device 120 and the backend server 150, in the present case for relaying the commands of the backend server 150 through the wireless communications link established between the terminal equipment 160 and the device 120.

The device 120 is thus able to implement the command derived by the backend server 150 after analysis of all or part of the status of the device 120. For instance, if the status of the device 120 is representative of a low level of remaining electrical energy in the battery 205, the command may correspond to the entering in a lower power consumption mode for the device 120.

Back to Figure 3, in a **step S340**, the device 120 ends the wireless communications link with the terminal equipment 160.

Such ending of the communication may occur on the behalf of the device 120 or of the terminal equipment 160 that may decide to end the communication. The ending of the communication may also occur if the device 120 detects a drop in the communications link with the terminal equipment 160.

Responsive to the ending of the communication with the terminal equipment 160, the device 120 re-establishes, in a **step S350**, a wireless communication link with the backend server 150 through the communications network 140.

However, in some embodiments, the steps S340 and S350 are not implemented, e.g. if a terminal equipment is permanently used in the vehicle 100 as a relay for exchanging data between the device 120 and the backend server 150.

## Claims

1. Device (120) for accessing data sent by a dongle (110) connected to a vehicle (100),
**characterized in that** it is battery (205) powered and comprises means (204) for wirelessly communicating with:
- at least one dongle (110) connected to a corresponding vehicle (100);
- a backend server (150) through a communications network (140); and
- at least one terminal equipment (160).

2. Device according to claim 1, wherein said means for wirelessly communicating comprise a short-range wireless communications transceiver for communicating with said at least one terminal equipment.

3. Device according to claim 1 or 2, wherein said means for wirelessly communicating comprise a long-range wireless communications transceiver for communicating with said backend server through the communications network.

4. Device according to any of the claims 1 to 3, implemented in a vehicle, said means for wirelessly communicating being configured for communicating with a dongle connected to said vehicle.

5. Device according to claim 4, wherein said device is not electrically wired connected to said vehicle.

6. Vehicle comprising a device according to any of the claims 1 to 5, wherein said device is not electrically wired connected to said vehicle.

7. Method for reducing the power consumption of a device according to any of the claims 1 to 5,
**characterized in that**, a wireless communication link being established between the device and the backend server through the communications network, the device implements:
- establishing (S310) a wireless communication link with a terminal equipment; and
- ending (S320) the wireless communication link with the backend server through the communications network.

8. Method according to claim 7, wherein said establishing (S310) the wireless communication link with the terminal equipment comprises:
- broadcasting (S312) an advertisement message;
- responsive to said broadcasting, receiving (S313) a request, sent by the terminal equipment, for establishing said wireless communication link with the terminal equipment.

9. Method according to claim 8, wherein said establishing (S310) the wireless communication link with the terminal equipment comprises:
- receiving (S311) an advertisement message broadcasted by the terminal equipment;
said broadcasting an advertisement message by the device being responsive to the receiving the advertisement message broadcasted by the terminal equipment.

10. Method according to any of the claims 7 to 9, wherein the device implements pairing (S300) with a given terminal equipment, the pairing comprising:
- receiving (S302) a request, sent by the backend server, for initiating a discovery procedure;
- responsive to the receiving the request, broadcasting (S303) a discovery message;
- receiving (S305) a request, sent by the backend server, for pairing with a given terminal equipment that received the broadcasted discovery message,
said connection with the terminal equipment being established only if the device identifies the terminal equipment as being the given terminal equipment it has been paired with.

11. Method according to any of the claims 7 to 10, wherein the device implements exchanging information (S330) with the terminal equipment, the exchanging information comprising:
- receiving (S335) a command, sent by the terminal equipment, for implementing a corresponding action in the terminal equipment.

12. Method according to any of the claims 7 to 11, wherein the device is according to claim 4 or 5, the exchanging information comprising:
- receiving (S331) a request, sent by the terminal equipment, for providing data;
- responsive to the receiving said request, sending (S332) the requested data to the terminal equipment.

13. Method according to any of the claims 7 to 12, wherein the device implements:
- ending (S340) the connection with the terminal equipment; and
- re-establishing (S350) a wireless communication link with the backend server through the communications network.
